# FASCICULE DE BREVET EUROPEEN

(11) **EP 1 872 925 B1**
(45) Date de publication et mention de la délivrance du brevet: **19.04.2017**
(21) Numéro de dépôt: 07301167.8
(22) Date de dépôt: 28.06.2007
(51) Int. Cl.: B29C 73/00, B29C 45/26, F21V 19/00, B29C 45/33, F21V 31/00, F21S 8/10

(54) **Bloc optique de vehicule et moule pour la fabrication d'un tel bloc**
Fahrzeugbeleuchtungsblock und Modul für die Herstellung eines solchen Blocks
Optical unit for a vehicle and mould for manufacturing such a unit

(30) Priorité: 30.06.2006 FR 0605941
(43) Date de publication de la demande: 02.01.2008
(73) Titulaire: Renault S.A.S., 92100 Boulogne-Billancourt (FR)
(72) Inventeur: Senechal, Pascal, 78550 Richebourg (FR)

(56) Documents cités:
- WO-A-02/10594
- DE-A1- 19 907 930
- FR-A1- 2 600 145
- JP-A- 8 203 302
- US-A- 4 576 568

## Description

L'invention concerne l'éclairage de véhicules automobiles, et en particulier les blocs optiques participant à l'éclairage du véhicule. Un bloc optique classique présentant les caractéristiques du préambule de la revendication 1 est connu par FR 2 600 145 et un moule sans inserts est connu par JP 08 203302.

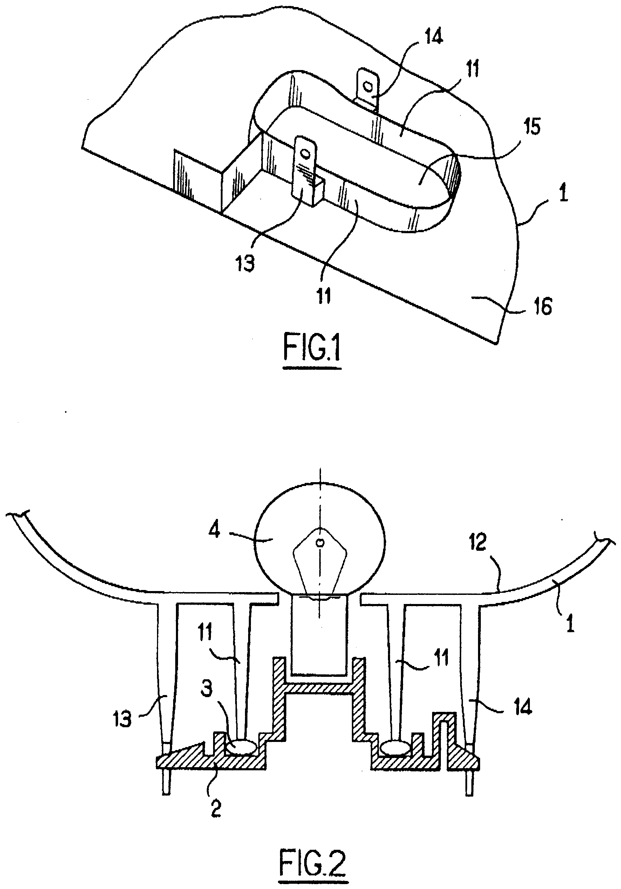

Un bloc optique connu présente une parabole réfléchissante réalisée sur une première face 12 d'une première paroi 16 d'une pièce moulée 1, dont un exemple est illustré en perspective à la figure 1. Une deuxième paroi 11 fait saillie depuis la première paroi 16 du côté opposé à la parabole réfléchissante. La deuxième paroi 11 entoure une ouverture 15 d'un passage d'ampoule. La figure 2 est une vue en coupe de la pièce moulée 1 sur laquelle un support d'ampoule 2 et une ampoule 4 ont été montés par l'intermédiaire des pattes de fixation 13 et 14 faisant saillie depuis la première paroi 16. Le support d'ampoule 2 comprime un joint d'étanchéité 3 contre l'arête de la deuxième paroi 11 afin de garantir l'étanchéité autour de l'ouverture 15.

Cependant, du fait de la complexité de la pièce moulée 1, due en particulier à la complexité des formes de la deuxième paroi 11 et de la parabole, et à la présence des pattes de fixation 13 et 14, un moule comprenant un grand nombre d'inserts de moulage est nécessaire. De plus, la demanderesse a constaté que le bloc optique incluant une telle pièce moulée 1 présentait un défaut d'étanchéité entre l'arête de la deuxième paroi 11 et le support d'ampoule 2.

L'invention vise à résoudre un ou plusieurs de ces inconvénients. L'invention porte ainsi sur un bloc optique de véhicule automobile conforme à la revendication 1.

Selon une variante, l'organe de fixation à une pièce annexe est une patte de fixation présentant un trou de fixation au niveau de sa partie distale.

Selon encore une variante, une bavure fait saillie depuis la deuxième paroi d'une hauteur inférieure au dixième de l'épaisseur de la deuxième paroi au niveau de l'arête.

Selon une autre variante, l'arête de la deuxième paroi entoure l'intégralité du passage.

Selon encore une autre variante, le support présente une surface de forme sensiblement complémentaire de l'arête de la deuxième paroi de la pièce moulée.

L'invention porte aussi sur un poinçon de moule d'injection d'un élément de bloc optique, conforme à la revendication 5.

Selon une variante, le premier insert de moulage est conformé pour définir une arête de la deuxième paroi présentant un contour fermé.

Selon encore une variante, le second insert de moulage est conformé pour définir la forme d'une face intérieure d'une patte de fixation présentant un trou de fixation au niveau de sa partie distale.

Selon une autre variante, le poinçon comprend :
- un organe mobile apte à coulisser transversalement, au niveau de l'extrémité distale de la patte de fixation à former, par rapport à la direction selon laquelle cette patte de fixation doit faire saillie, entre une position de libération de la patte de fixation et une position de traversée de la patte de fixation ;
- un organe d'actionnement déplaçant sélectivement l'organe mobile entre la position de libération et la position de traversée.

Selon encore une autre variante, l'organe mobile est monté coulissant sur le deuxième insert.

Selon encore une variante, le corps de poinçon est conformé pour définir la forme d'une partie de la surface extérieure de la deuxième paroi.

L'invention porte par ailleurs sur un moule comprenant un poinçon tel que décrit ci-dessus et une matrice conformée pour définir la forme de la première face de la première paroi lorsqu'elle est placée en position de moulage avec le poinçon.

L'invention porte en outre sur un procédé de formation d'un bloc optique, comprenant une étape d'injection de matière plastique entre le poinçon et la matrice du moule décrit ci-dessus.

D'autres caractéristiques et avantages de l'invention ressortiront clairement de la description qui en est faite ci-après, à titre indicatif et nullement limitatif, en référence aux dessins annexés, dans lesquels :
- la figure 1 illustre une vue en perspective schématique d'une pièce moulée présentant une ouverture de passage d'ampoule et une parabole réfléchissante ;
- la figure 2 illustre une vue en coupe de la pièce moulée de la figure 1, selon un plan passant par les pattes de fixation, la pièce moulée étant munie d'un support d'ampoule et d'une ampoule ;
- la figure 3 illustre une vue en coupe d'un moule d'injection de la pièce moulée, selon un plan ne passant pas par les pattes de fixation ;
- la figure 4 illustre une vue en coupe du moule d'injection, selon un plan passant par les pattes de fixation.

La demanderesse a identifié que le problème d'étanchéité au niveau de l'arête de la seconde paroi 11 était du à la présence d'une bavure de moulage traversant cette arête. Le joint 3 en contact avec l'arête de la seconde paroi 11 épouse mal le profil de l'arête au niveau où la bavure traverse l'arête, ce qui conduit à un passage de poussière, ou d'eau par capillarité. La demanderesse a constaté que cette bavure résultait de la conception du moule d'injection de la pièce moulée.

En effet, du fait de la complexité des formes de la pièce moulée, le moule est muni d'un poinçon présentant un corps et plusieurs inserts de moulage rapportés pour réaliser les pattes de fixation et la seconde paroi. Un premier insert de moulage définit la géométrie de la face intérieure de la seconde paroi 11. Afin que les dimensions du premier insert de moulage soient aussi réduites que possible, la géométrie de l'arête de la seconde paroi 11 est définie par le corps du poinçon. Des deuxième et troisième inserts de moulage définissent localement la géométrie de l'arête de la paroi 11, ainsi que la géométrie des faces intérieures des pattes de fixation 13 et 14. La jonction entre le corps et les deuxième et troisième inserts de moulage au niveau de l'arête de la seconde paroi 11 induit une bavure.

L'invention propose un bloc optique moulé et des moyens de moulage associés permettant de réaliser la seconde paroi sans que son arête ne soit traversée par une bavure de moulage.

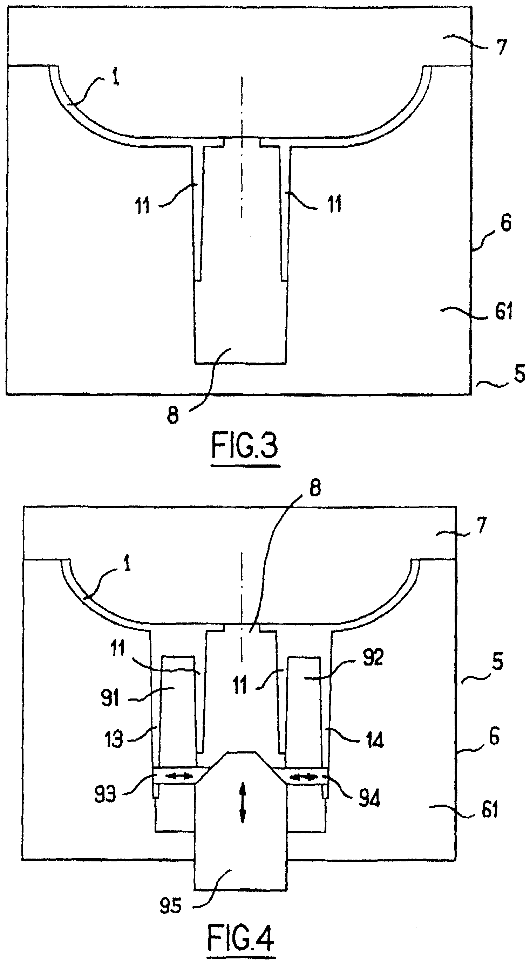

La figure 3 illustre une première vue en coupe d'un moule d'injection destiné à former une pièce moulée 1 formant un élément de bloc optique. Cette vue correspond à une coupe selon un plan ne passant pas par des pattes de fixation à former à proximité de la deuxième paroi 11. La figure 4 illustre une deuxième vue en coupe du moule d'injection selon un plan passant par les pattes de fixation 13 et 14.

On va maintenant décrire un mode de réalisation d'un moule destiné à obtenir une pièce moulée 1 telle qu'illustrée à la figure 1. Par conséquent, les références de la figure 1 seront également utilisées par la suite.

Le moule 5 comprend notamment un poinçon 6 et une matrice 7. Le poinçon 6 comprend un corps de poinçon 61 conformé pour définir la forme de la face de la paroi 16 opposée à la face 12. Le poinçon comprend également un premier insert de moulage 8 illustré aux figures 3 et 4. Cet insert 8 est assemblé sur le corps de poinçon 61. L'insert 8 est conformé pour définir la forme de la face intérieure de la paroi 11. L'insert 8 est également conformé pour définir la forme de l'intégralité de l'arête de la paroi 11. Le poinçon 6 comprend en outre des inserts de moulage 91 et 92. Ces inserts de moulage 91 et 92 sont assemblés sur le corps de poinçon 61 et sont conformés pour définir la forme d'une partie de la face extérieure de la paroi 11. Les inserts de moulage 91 et 92 sont également conformés pour définir la forme d'une face intérieure (c'est à dire une face disposée en vis-à-vis de la face extérieure de la paroi 11) d'un organe de fixation respectif 13 et 14. Dans l'exemple illustré, le reste de la forme de la face extérieure de la paroi 11 est défini par le corps de poinçon 61.

Du fait de cette configuration, la pièce moulée réalisée en utilisant un tel poinçon 6 ne présente pas de bavure traversant l'arête de la paroi 11. En effet, il n'existe pas de jonction entre le corps de poinçon 61 et les inserts de moulage 91, 92 pouvant former une bavure traversant l'arête, puisque cette arête est formée dans son intégralité par l'insert de moulage 8.

Afin de favoriser l'étanchéité, on prévoit que l'arête de la paroi 11 formée en utilisant un tel insert 8 présente un contour fermé.

Dans cet exemple, les organes de fixation 13 et 14 devant être formés sont des pattes de fixation d'un support d'un organe d'émission lumineuse. On prévoit avantageusement que les inserts de moulage 91 et 92 soient conformés pour la formation d'un trou de fixation au niveau de l'extrémité distale des pattes 13 et 14. Chaque trou traverse une patte de fixation respective selon une direction transversale par rapport à la direction selon laquelle cette patte fait saillie.

Pour cela, comme illustré à la figure 4, le poinçon 6 comprend avantageusement des organes mobiles 93 et 94 aptes à coulisser selon cette direction transversale respectivement par rapport aux inserts 91 et 92. Ces organes 93 et 94 coulissent entre une position de libération de la patte de fixation et une position de traversée (c'est à dire une position de formation de trou) de la patte de fixation. La figure 4 illustre la position de traversée, dans laquelle une extrémité de chaque organe 93, 94 vient en contact avec le corps de poinçon 61. Un organe d'actionnement 95 est monté mobile par rapport au corps de poinçon 61 et est apte à solliciter les organes 93 et 94 entre leur position de libération et leur position de traversée.

La matrice 7 permet de définir la forme de la face 12 lorsqu'elle maintenue en position de moulage avec le poinçon 6. Le contact entre l'insert 8 et la matrice 7 permet de définir l'ouverture 15 fournissant un passage pour un organe d'émission lumineuse.

Par injection d'un matériau plastique entre le poinçon et la matrice 7, on peut obtenir une pièce moulée avec une arête de paroi 11 garantissant une bonne étanchéité avec un joint.

La pièce moulée 1 obtenue présente donc la paroi 16, dont la face 12 est destinée à être munie d'une surface optique réfléchissante. La pièce 1 présente en outre une paroi 11 dont l'arête est destinée à servir de surface d'étanchéité et n'est pas traversée par une bavure de moulage. Cette arête entoure l'intégralité d'un passage pour un organe d'émission lumineuse. La paroi 11 fait saillie depuis la paroi 16 et délimite ledit passage. La pièce 1 présente encore des organes de fixation d'une pièce annexe 13 et 14 faisant saillie depuis la paroi 16, à proximité de la paroi 11. Ces organes 13 et 14 sont de forme sensiblement plane et sont sensiblement parallèles à la paroi 11.

Afin de garantir une bonne étanchéité, la bavure pouvant être formée le long de l'arête de la paroi 11 présentera de préférence une épaisseur inférieure au dixième de l'épaisseur de la paroi 11 au niveau de l'arête.

Comme illustré à la figure 2, un support 2 peut être fixé à la pièce 1 par l'intermédiaire des organes de fixation 13 et 14. Ce support 2 présente un organe de fixation d'un organe d'émission lumineuse, réalisé de façon connue en soi. Un joint d'étanchéité 3 est comprimé entre le support et l'arête de la paroi 11. Le support 2 présente une surface de forme sensiblement complémentaire à celle de l'arête de la paroi 11, afin de garantir une bonne étanchéité au niveau des contacts avec le joint 3.

## Revendications

1. Bloc optique de véhicule automobile, comprenant :
- une pièce moulée présentant :
- une première paroi (16) présentant une première face (12) munie d'une surface optique réfléchissante;
- une deuxième paroi (11) faisant saillie depuis une deuxième face de la première paroi (16) opposée à la première face (12), et délimitant un passage (15) pour un organe d'émission lumineuse ;
- au moins un organe de fixation (13, 14) de la pièce moulée à une pièce annexe, faisant saillie depuis la deuxième face (12) à proximité de la deuxième paroi ;
- un support (2) fixé à la pièce moulée par l'intermédiaire de l'organe de fixation à une pièce annexe, et présentant un organe de fixation d'un organe d'émission lumineuse ;
- un joint d'étanchéité (3) comprimé entre le support et l'arête de la deuxième paroi ;
la pièce moulée étant une pièce moulée dans un moule muni d'un poinçon présentant un corps (61) et plusieurs inserts de moulage (8, 91, 92) rapportés pour réaliser ledit au moins un organe de fixation (13, 14) et ladite deuxième paroi (11), lesdits inserts créant une zone de bavure de moulage,
**caractérisé en ce que** ladite zone de bavure de moulage est localisée de manière que ladite pièce moulée ne présente pas de bavure traversant l'arête de la deuxième paroi de façon à assurer l'étanchéité.

2. Bloc optique selon la revendication 1, dans lequel l'organe de fixation (13, 14) à une pièce annexe est une patte de fixation présentant un trou de fixation au niveau de sa partie distale.

3. Bloc optique selon l'une quelconque des revendications précédentes, dans lequel l'arête de la deuxième paroi (11) entoure l'intégralité du passage (15).

4. Bloc optique selon l'une quelconque des revendications précédentes, dans lequel le support présente une surface de forme sensiblement complémentaire de l'arête de la deuxième paroi de la pièce moulée.

5. Poinçon (6) de moule d'injection d'un élément de bloc optique, qui comprend :
- un corps de poinçon (61) conformé pour définir la forme d'une deuxième face d'une première paroi de l'élément optique, cette deuxième face étant opposée à une première face de la première paroi destinée à être munie d'une surface réfléchissante ;
**caractérisé en ce qu'**il comprend :
- un premier insert de moulage (8) apte à être assemblé au corps de poinçon et conformé pour définir la forme d'une face intérieure et de l'intégralité de l'arête d'une deuxième paroi en saillie depuis la deuxième face ;
- un deuxième insert de moulage (91, 92) apte à être assemblé au corps de poinçon et conformé pour définir la forme d'une partie d'une face extérieure de la deuxième paroi et la forme d'une face intérieure d'un organe de fixation à une pièce annexe.

6. Poinçon de moule d'injection selon la revendication 5, dans lequel le premier insert de moulage est conformé pour définir une arête de la deuxième paroi présentant un contour fermé.

7. Poinçon de moule d'injection selon la revendication 5 ou 6, dans lequel le second insert de moulage est conformé pour définir la forme d'une face intérieure d'une patte de fixation présentant un trou de fixation au niveau de sa partie distale.

8. Poinçon de moule d'injection selon la revendication 7, comprenant :
- un organe mobile apte à coulisser transversalement, au niveau de l'extrémité distale de la patte de fixation à former, par rapport à la direction selon laquelle cette patte de fixation doit faire saillie, entre une position de libération de la patte de fixation et une position de traversée de la patte de fixation ;
- un organe d'actionnement déplaçant sélectivement l'organe mobile entre la position de libération et la position de traversée.

9. Poinçon de moule d'injection selon la revendication 8, dans lequel l'organe mobile est monté coulissant sur le deuxième insert.

10. Poinçon de moule d'injection selon l'une quelconque des revendications 5 à 9, dans lequel le corps de poinçon est conformé pour définir la forme d'une partie de la surface extérieure de la deuxième paroi.

11. Moule, comprenant un poinçon selon l'une quelconque des revendications 5 à 10 et une matrice conformée pour définir la forme de la première face de la première paroi lorsqu'elle est placée en position de moulage avec le poinçon.

12. Procédé de formation d'un élément de bloc optique, **caractérisé en ce qu'**il comprend une étape d'injection de matière plastique entre le poinçon et la matrice du moule selon la revendication 11.

## Patentansprüche

1. Optischer Block für ein Kraftfahrzeug, umfassend:
- ein Formteil, aufweisend:
- eine erste Wand (16), die eine erste Seite (12) aufweist, die mit einer reflektierenden optischen Oberfläche versehen ist;
- eine zweite Wand (11), die von einer zweiten Seite der ersten Wand (16), die der ersten Seite (12) gegenüberliegt, vorragt und einen Durchlass (15) für ein lichtaussendendes Organ begrenzt;
- wenigstens ein Organ zur Befestigung (13, 14) des Formteils an einem zusätzlichen Teil, das von der zweiten Seite (12) in der Nähe der zweiten Wand vorragt;
- eine Halterung (2), die unter Zwischenstellung des Organs zur Befestigung an einem zusätzlichen Teil am Formteil befestigt ist und ein Organ zur Befestigung eines lichtaussendenden Organs aufweist;
- eine Dichtung (3), die zwischen der Halterung und der Kante der zweiten Wand komprimiert ist;
wobei das Formteil ein Teil ist, das in einer Form gegossen wird, die mit einem Stempel versehen ist, der einen Körper (61) und mehrere angestückte Formeinsätze (8, 91, 92) aufweist, um das wenigstens eine Organ zur Befestigung (13, 14) und die zweite Wand (11) zu bilden, wobei die Einsätze einen Formgratbereich bilden,
**dadurch gekennzeichnet, dass** der Formgratbereich derart lokalisiert ist, dass das Formteil keinen Formgrat aufweist, der die Kante der zweiten Wand quert, um die Dichtigkeit zu gewährleisten.

2. Optischer Block nach Anspruch 1, wobei das Organ zur Befestigung (13, 14) an einem zusätzlichen Teil eine Befestigungsklaue ist, die im Bereich ihres distalen Teils ein Befestigungsloch aufweist.

3. Optischer Block nach einem der vorhergehenden Ansprüche, wobei die Kante der zweiten Wand (11) die Gesamtheit des Durchlasses (15) umgibt.

4. Optischer Block nach einem der vorhergehenden Ansprüche, wobei die Halterung eine Oberfläche mit einer Form aufweist, die im Wesentlichen komplementär zur Kante der zweiten Wand des Formteils ist.

5. Stempel (6) für eine Form zum Spritzgießen eines Elements eines optischen Blocks, der umfasst:
- einen Stempelkörper (61), der derart beschaffen ist, dass er die Form einer zweiten Seite einer ersten Wand des optischen Elements definiert, wobei diese zweite Seite einer ersten Seite der ersten Wand gegenüberliegt, die dazu bestimmt ist, mit einer reflektierenden Oberfläche versehen zu werden;
**dadurch gekennzeichnet, dass** er umfasst:
- einen ersten Formeinsatz (8), der imstande ist, mit dem Stempelkörper zusammengefügt zu werden und derart beschaffen ist, dass er die Form einer Innenseite und der Gesamtheit der Kante einer zweiten Wand definiert, die von der zweiten Seite vorragt;
- einen zweiten Formeinsatz (91, 92), der imstande ist, mit dem Stempelkörper zusammengefügt zu werden und derart beschaffen ist, dass er die Form eines Teils einer Außenseite der zweiten Wand und die Form einer Innenseite eines Organs zur Befestigung an einem zusätzlichen Teil definiert.

6. Stempel für eine Spritzgussform nach Anspruch 5, wobei der erste Formeinsatz derart beschaffen ist, dass er eine Kante der zweiten Wand definiert, die eine geschlossene Kontur aufweist.

7. Stempel für eine Spritzgussform nach Anspruch 5 oder 6, wobei der zweite Formeinsatz derart beschaffen ist, dass er die Form einer Innenseite einer Befestigungsklaue definiert, die im Bereich ihres distalen Teils ein Befestigungsloch aufweist.

8. Stempel für eine Spritzgussform nach Anspruch 7, umfassend:
- ein bewegliches Organ, das imstande ist, im Bereich des distalen Endes der zu bildenden Befestigungsklaue quer in Bezug auf die Richtung, in der diese Befestigungsklaue vorragen soll, zwischen einer Position der Freigabe der Befestigungsklaue und einer Position der Durchquerung der Befestigungsklaue zu gleiten;
- ein Betätigungsorgan, welches das bewegliche Organ selektiv zwischen der Freigabeposition und der Durchquerungsposition verschiebt.

9. Stempel für eine Spritzgussform nach Anspruch 8, wobei das bewegliche Organ gleitbar auf dem zweiten Einsatz montiert ist.

10. Stempel für eine Spritzgussform nach einem der Ansprüche 5 bis 9, wobei der Stempelkörper derart beschaffen ist, dass er die Form eines Teils der Außenfläche der zweiten Wand definiert.

11. Form, umfassend einen Stempel nach einem der Ansprüche 5 bis 10 und eine Matrize, die derart beschaffen ist, dass sie die Form der ersten Seite der ersten Wand definiert, wenn sie mit dem Stempel in der Formungsposition platziert ist.

12. Verfahren zur Herstellung eines Elements eines optischen Blocks, **dadurch gekennzeichnet, dass** es einen Schritt des Einspritzens von Kunststoff zwischen den Stempel und die Matrize der Form nach Anspruch 11 umfasst.

## Claims

1. Optical unit for a motor vehicle, comprising:
- a moulded part having:
- a first wall (16) having a first face (12) provided with a reflecting optical surface;
- a second wall (11) protruding from a second face of the first wall (16) opposite the first face (12), and delimiting a passage (15) for a light-emitting member;
- at least one member (13, 14) for fixing the moulded part to an ancillary part, protruding from the second face (12) in proximity to the second wall;
- a support (2) fixed to the moulded part by way of the member for fixing to an ancillary part, and having a member for fixing a light-emitting member;
- a seal (3) compressed between the support and the edge of the second wall;
the moulded part being a part moulded in a mould provided with a punch having a body (61) and several moulding inserts (8, 91, 92) added to produce said at least one fixing member (13, 14) and said second wall (11), said inserts creating a moulding flash zone,
**characterized in that** said moulding flash zone is located in such a way that said moulded part does not have any flash crossing the edge of the second wall so as to ensure the seal-tightness.

2. Optical unit according to Claim 1, in which the member (13, 14) for fixing to an ancillary part is a fixing tab having a fixing hole in its distal part.

3. Optical unit according to any one of the preceding claims, in which the edge of the second wall (11) surrounds all of the passage (15).

4. Optical unit according to any one of the preceding claims, in which the support has a surface of a form substantially complementing the edge of the second wall of the moulded part.

5. Injection mould punch (6) for an optical unit element, which comprises:
- a punch body (61) shaped to define the form of a second face of a first wall of the optical element, this second face being opposite a first face of the first wall intended to be provided with a reflecting surface;
**characterized in that** it comprises:
- a first moulding insert (8) capable of being assembled to the punch body and shaped to define the form of an internal face and all the edge of a second wall protruding from the second face;
- a second moulding insert (91, 92) capable of being assembled to the punch body and shaped to define the form of a part of an external face of the second wall and the form of an internal face of a member for fixing to an ancillary part.

6. Injection mould punch according to Claim 5, in which the first moulding insert is shaped to define an edge of the second wall having a closed outline.

7. Injection mould punch according to Claim 5 or 6, in which the second moulding insert is shaped to define the form of an internal face of a fixing tab having a fixing hole in its distal part.

8. Injection mould punch according to Claim 7, comprising:
- a mobile member capable of sliding transversely, at the distal end of the fixing tab to be formed, relative to the direction in which this fixing tab must protrude, between a fixing tab release position and a fixing tab feed-through position;
- an actuation member selectively displacing the mobile member between the release position and the feed-through position.

9. Injection mould punch according to Claim 8, in which the mobile member is slidingly mounted on the second insert.

10. Injection mould punch according to any one of Claims 5 to 9, in which the punch body is shaped to define the form of a part of the external surface of the second wall.

11. Mould, comprising a punch according to any one of Claims 5 to 10 and a die shaped to define the form of the first face of the first wall when it is placed in moulding position with the punch.

12. Method for forming an optical unit element, **characterized in that** it comprises a step of injection of plastic material between the punch and the die of the mould according to Claim 11.
